# EUROPEAN PATENT SPECIFICATION

(11) **EP 2 216 894 B1**
(45) Date of publication and mention of the grant of the patent: **27.08.2014**
(21) Application number: 08800584.8
(22) Date of filing: 05.09.2008
(51) Int. Cl.: H02N 2/14, H02N 2/10

(54) **ULTRASONIC MOTOR DRIVING METHOD**
ULTRASCHALLMOTORANTRIEBSVERFAHREN
PROCÉDÉ D'EXCITATION POUR MOTEUR ULTRASONIQUE

(30) Priority: 26.10.2007 CN 200710124086
(43) Date of publication of application: 11.08.2010
(73) Proprietor: Boly Media Communications (Shenzhen) Co., Ltd, Shenzhen, Guangdong 518067 (CN)
(72) Inventor: LI, Yi, Guangdong 518067 (CN); PENG, Yong, Guangdong 518067 (CN); HU, Xiaoping, Guangdong 518067 (CN)
(74) Representative: Nederlandsch Octrooibureau
(86) International application number: PCT/CN2008/001588
(87) International publication number: WO 2009/052696

(56) References cited:
- EP-A1- 0 740 354
- CN-A- 1 697 298
- CN-A- 1 767 347
- CN-A- 1 825 744
- CN-A- 1 874 134
- CN-Y- 201 075 845
- CN-Y- 201 118 469
- JP-A- 6 237 583
- JP-A- 7 274 558
- JP-A- 2004 120 840
- US-A- 5 093 606
- US-A1- 2006 049 720

## Description

### Technical Field

The present invention relates to a method for driving an ultrasonic motor.

### Technical Background

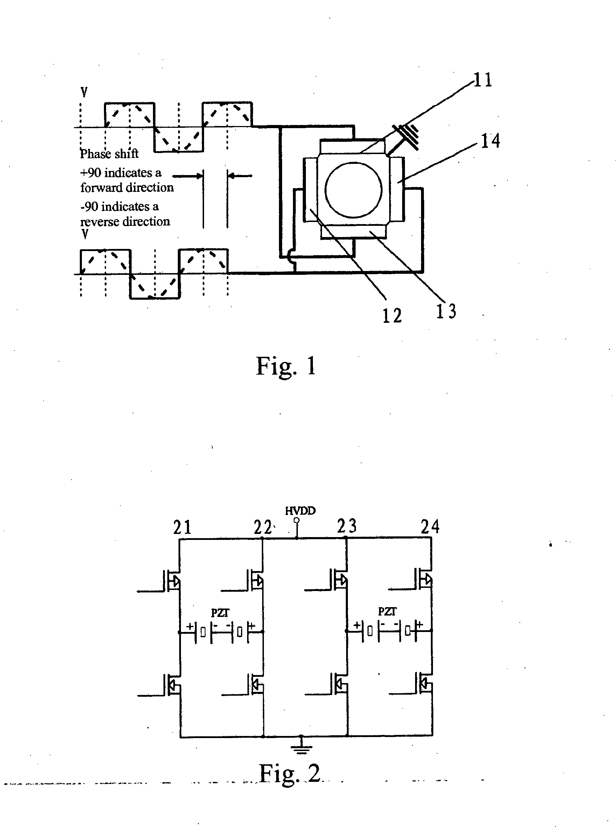

The ultrasonic motor is a driving mechanism which is formed by using the inverse piezoelectric effects of piezoelectric materials to incorporate a plurality of piezoelectric elements into a particular structure. It generally comprises functional components, such as a stator and a rotor etc. Piezoelectric elements having electrostrictive effects are fixed to the stator. The ultrasonic motor in the prior art is generally provided with four (or an integral multiple of four) piezoelectric elements, and driven by a sinusoidal power supply of four-phase or two-phase in orthogonal. That is, in a first method, power signals of sin ω*t*, cos *ωt,* -sin *ωt* and -cos *ωt* are applied to the four piezoelectric elements in the same group, respectively. Alternatively, in a second method, two piezoelectric elements of the same group are connected in inverse series, and then are provided with power signals of sin *ωt* and *cos* ω*t,* as shown in Fig.1, such that traveling waves are generated in the ultrasonic motor to rotate the motor.

The second method saves two power supplies than the first method, and thus is utilized more often than the first method in practice. However, according to the second method, the piezoelectric elements of the ultrasonic motor must utilize power signals of sin *ωt* and cos *ωt* in inverse series to replace the original power signals of -sin *ωt* and -cos *ωt.* The power supply need a diploid voltage to power the piezoelectric elements in series. Furthermore, the piezoelectric element itself needs relatively high driving amplitude, so the voltage amplitude of a power supply is relatively high, often between several tens and several hundreds volt, when piezoelectric element is powered by the sinusoidal power supply of two-phase in orthogonal. In particular, for handheld devices powered by batteries, the difficulty in designing the power supply is increased.

In a known ultrasonic motor as shown in Fig.1, the stator is formed of a hollow metal cylinder, outside of which piezoelectric ceramics are attached. The external surface of the piezoelectric element forms an electrode after metallization, the internal surface thereof being shorted by the metal cylinder so as to become a common ground terminal. The piezoelectric elements 11-14 as shown in Fig.1 are polarized in a forward direction (indicated by "+" which means that the polarization is directed to the inner metal cylinder from the outside) respectively. A power signal of 2Asin*ωt* is then applied across the piezoelectric elements 11 and 13, and a power signal of 2Acosω*t* is applied across the piezoelectric elements 12 and 14, as dashed lines shown in Fig.1, wherein A is the amplitude of the voltage required to drive a single piezoelectric element such that the ultrasonic motor starts work.

Circuits for forming the sinusoidal power supply are complex, in particular, the power supply needs a bulky filter circuit, so it is preferred to select a inverting circuit with a more simply circuit structure to output square waves of identical frequencies and phases. As shown in Fig.2, two single-phase H bridges controlled independently are utilized to output two square waves, the phase difference of which is 90°, instead of the sinusoidal power supply as shown in Fig.1 (referring to solid line shown in Fig.1), such that the ultrasonic motor can also start work. At the time, the real effective part of the square wave is only the fundamental component, the amplitude of which is 1.27(=4/π) times of the voltage amplitude of the square wave. The remaining harmonic components are useless for driving the motor, so they could be restrained in various ways.

When the ultrasonic motor mentioned above is driven by two sinusoidal or square wave power supplies of two-phase in orthogonal, the power supply powers two piezoelectric elements in series and outputs a voltage with the amplitude of 2A, wherein A is the amplitude of the voltage required to drive a single piezoelectric element. In addition, in the application of handheld devices, in order to drive the ultrasonic motor with a battery, a boost DC/DC switching circuit should be preposed so as to boost the battery voltage up to the voltage required by the ultrasonic motor. An inverting circuit as shown in Fig.2 is used to convert the boosted voltage into the voltage of two-phase in orthogonal required by the ultrasonic motor. When the battery voltage is fixed and the amplitude of the voltage input to the motor increases, the boost ratio of the boost DC/DC switching circuit increases accordingly, such that the motor is more difficult to be realized.

EP 0 740 354 A1 discloses a stack type energy conversion element that includes a first electro-mechanical energy conversion element having a plurality of driving electrodes as a first group, all of which are polarized in a first direction, and a second electro-mechanical energy conversion element having a plurality of driving electrodes as a second group, all of which are polarized in a second direction in which an inverse characteristic to that in the first direction is obtained, wherein the first and second energy conversion elements are stacked on each other such that phases of the electrodes of the first group are shifted from those of the electrodes of the second group.

US 2006/0049720 A1 discloses an optical assembly that contains an optical device movably attached to an apparatus for driving a threaded shaft assembly. The apparatus contains a threaded shaft with an axis of rotation and, engaged therewith, a threaded nut. The assembly contains a device for subjecting the threaded nut to ultrasonic vibrations and thereby causing the shaft to simultaneously rotate and translate in the axial direction.

CN 1 874 134 A discloses an ultrasonic motor and its driving method. The motor comprises rotor and stator, and piezoelectric elements are formed on the stator or rotor, the number of the piezoelectric elements is 3,5,7 or integral multiples of them. The driving method comprises the following steps: acquiring polyphase source, the source has M phases, in which M is 3,5,7 or integral multiples of them, in which the phase difference is 2p/M; and applying the phases voltage in the source respectively to the piezoelectric elements.

JP2004120840 discloses a first switching element and a fourth switching element that operate in a pair, a second switching element and a third switching element that operate in a pair, and a first piezoelectric element is driven by each pair being switched in reverse phase. A third switching element and a fifth switching element operate in a pair, and the fourth switching element and the sixth switching element operate in a pair. The second piezoelectric element is driven by each pair being switched in reverse phase, and it gets in such state that a junction a2 and a junction a3 are short-circuited at all times. The first piezoelectric element and the second piezoelectric element are driven individually using the same drive circuit.

### Summary of the Invention

One object to be solved by the present application is to provide a method for driving an ultrasonic motor using a simplified driving circuit.

Another object to be solved by the present application is to provide a method for driving an ultrasonic motor using more a simplified driving circuit that is easier to be integrated.

Another yet object to be solved by the present application is to provide a method for driving an ultrasonic motor with a simplified driving circuit, wherein the efficiency of passive elements in the driving circuit is improved.

Yet another object to be solved by the present application is to provide a method for driving an ultrasonic motor using the most simplified driving circuit.

The fist object of the present invention is achieved by providing an ultrasonic motor driving method comprising:
A. dividing piezoelectric elements of the ultrasonic motor into two-two groups, connecting one terminal of a first piezoelectric element in each group to a first node, the other terminal of the first piezoelectric element to a second node,
   connecting one terminal of a second piezoelectric element in each group to a third node, the other terminal of the second piezoelectric element to the second node, and
   wherein the second node is a common ground terminal for each of the piezoelectric elements, every four adjacent piezoelectric elements being polarized in sequence of "+ + - -";
B. utilizing a three-phase bridge inverting circuit comprising a first leg, a second leg and a third leg, an output terminal of each of the first, second and third legs being connected with the first node, the second node and the third node of the ultrasonic motor, respectively;
C. controlling the first leg with a signal so that an upper transistor and a lower transistor of the first leg to be conductive symmetrically and complementarily,
   controlling the third leg with a signal having a waveform, a phase of which being reversed relative to the signal for controlling the first leg, and
   controlling the second leg with a signal having a waveform, a phase of which lags behind or advances the signal for the first leg by an electric angle of 90°; and
D. outputting a first alternating square wave voltage between the first node and the second node, and a second alternating square wave voltage between the third node and the second node,
   wherein a phase of the first alternating square wave voltage differs from that of the second alternating square wave voltage by an electric angle of 90°, and each of the first and second alternating square wave voltage has a frequency at which the ultrasonic motor resonates.

A DC/DC switching circuit is disposed preceding the three-phase bridge inverting circuit, such that the supply voltage is converted to a voltage required by the piezoelectric elements.

The second object of the present invention is achieved by providing an ultrasonic motor driving method comprising:
A. dividing piezoelectric elements of the ultrasonic motor into three-three groups, connecting one terminal of a first piezoelectric element in each group to a first node, the other terminal of the first piezoelectric element to a forth node,
   connecting one terminal of a second piezoelectric element in each group to a second node, the other terminal of the second piezoelectric element to the forth node,
   connecting one terminal of a third piezoelectric element in each group to a third node, the other terminal of the third piezoelectric element to the forth node,
   wherein the forth node is a common ground terminal for each piezoelectric element, the piezoelectric elements being all polarized in forward direction;
B. utilizing a three-phase bridge inverting circuit comprising a first leg, a second leg and a third leg, the output terminals of the three legs being connected with the first node, the second node and the third node of the ultrasonic motor, respectively;
C. controlling the first leg with a signal so that an upper transistor and a lower transistor of the first leg to be conductive symmetrically and complementarily,
   controlling the second leg with a signal having a waveform, a phase of which lags behind or advances that for the first leg by an electric angle of 120°, and
   controlling the third leg with a signal having a waveform, a phase of which lags behind or advances that of the first leg by an electric angle of 240°; and
D. outputting a first alternating square wave voltage between the first node and the second node, a second alternating square wave voltage between the second node and the third node, and a third alternating square wave voltage between the third node and the first node, respectively,
   wherein phases of the first, second and third alternating square wave voltages differ from each other by an electric angle of 120°, and each of the first, second and third alternating square wave voltages has a frequency at which the ultrasonic motor resonates.

A DC/DC switching circuit is disposed preceding the three-phase bridge inverting circuit, such that the supply voltage is converted to a voltage required by the piezoelectric elements.

The third object of the present invention is achieved by providing an ultrasonic motor driving method comprising:
A. dividing piezoelectric elements of the ultrasonic motor into two-two groups, connecting one terminal of a first piezoelectric element in each group to a first node, the other terminal of the first piezoelectric element to a third node,
   connecting one terminal of a second piezoelectric element in each group to a second node, the other terminal of the second piezoelectric element to the third node, and
   wherein the third node is a common ground terminal for each of the piezoelectric elements, every four adjacent piezoelectric elements being polarized in sequence of "+ + - -";
B. utilizing two half-bridge circuits comprising a first leg and a second leg, the output terminals of the first and second legs being connected with the first node and the second node of the ultrasonic motor, respectively, and the ground terminal of the half-bridge circuit being connected with the third node of the ultrasonic motor;
C. controlling an upper transistor and a lower transistor of the first leg to be conductive at for a particular range of conduction angles, respectively,
   controlling the second leg with a signal having a waveform, a phase of which lags behind or advances that of the first leg by an electric angle of 90°; and
D. outputting two DC ripple voltages, one of which differs from the other by a phase angle of 90°, wherein each of two DC ripple voltages has a frequency at which the ultrasonic motor resonates.

A DC/DC switching circuit is disposed preceding the two half-bridge circuits, such that the supply voltage is converted to a voltage required by the piezoelectric elements.

The forth object of the present invention is achieved by providing an ultrasonic motor driving method comprising:
A. dividing piezoelectric elements of the ultrasonic motor into two-two groups,
   connecting one terminal of a first piezoelectric element in each group to a first node, the other terminal of the first piezoelectric element to a third node,
   connecting one terminal of a second piezoelectric element in each group to a second node, the other terminal of the second piezoelectric element to the third node, and
   wherein the third node is a common ground terminal for each of the piezoelectric elements, every four adjacent piezoelectric elements being polarized in sequence of "+ + - -";
B. utilizing a first boost DC/DC switching circuit and a second boost DC/DC switching circuit to inverting the supply voltage into the voltage required by the ultrasonic motor, output terminals of the two boost DC/DC switching circuits being connected with the first node and the second node of the ultrasonic motor, respectively;
C. each of the boost DC/DC switching circuits comprises an inductor, a transistor and a diode, one end of the inductor being connected to the output terminal of the power supply, the other end of the inductor being connected to the collector of the transistor and the anode of the diode, the transistor being connected between the output terminal of the inductor and the ground terminal, and the diode being connected between the output terminal of the inductor and the output terminal of the entire circuit;
D. controlling the first boost DC/DC switching circuit to work at a particular ripple frequency, a ripple frequency at which the second boost DC/DC switching circuit works lags behind or advances that of the first boost DC/DC switching circuit by a quarter of period; and
E. outputting two DC ripple voltages, one of which has a phase differs from the other by a quarter of a period,
wherein each of the two DC ripple voltages has an amplitude for output voltages of the first and second boost DC/DC switching circuits, and a ripple frequency at which the ultrasonic motor resonates.

A transistor is connected between an output terminal of each of the boost DC/DC switching circuits and the ground terminal, the transistor being controllable to periodically discharge piezoelectric elements at the ripple frequency so as to accelerate the speed of discharge.

A diode is in reverse parallel connection with the transistor of each of the boost DC/DC switching circuits, while each diode is in reverse parallel connection with a further transistor. Thus, a buck DC/DC circuit is formed between the ultrasonic motor to the power supply. The electric energy of the ultrasonic motor is feed back to the power supply.

The advantage of the ultrasonic motor driving method according to the present invention is that only six switching transistors are required. The polarization in sequence of "+ + - -" may decreases the voltage amplitude of the power supply. Thus the driving circuit is simplified and the efficiency thereof could be improved, and thus the cost is reduced. It is especially advantageous for the ultrasonic motor to be used in the handheld devices powered by batteries.

Another advantage of outputting a voltage of two-phase in orthogonal by the three-phase bridge circuit is that this circuit may also output a voltage of three-phase in symmetry by another control method. As a result, when the piezoelectric motor is a three-phase structure or a two-phase/three-phase compatible structure, the motor may be driven by a voltage of three-phase. Therefore, a same set of driving circuit provides another option for the same motor, or the same set of driving circuit drives two or more rotors of the same kind.

The advantage of outputting a voltage of two-phase in orthogonal by the three-phase bridge circuit is that only six switching transistors are required. The circuit is simple so as to be integrated, with the automatically balanced input current, little fluctuation of the output torque, and abroad application prospect.

The advantage of using a dual half-bridge direct ripple circuit as the power supply is that the number of switching tubes and the volume of the power supply are reduced.

The advantage of two boost DC/DC switching circuit as a driving circuit is that, only four transistors are required together with proper peripheral circuit, so as to drive the ultrasonic motor. Furthermore, as the direct signal is outputted, the switching frequency of the transistor could be improved significantly, such as, to hundreds of kHz or million of kHz, such that the induction and capacitance required by the boost DC/DC switching circuit and its volume are reduced to promote the miniaturization and integration of the driving circuit. Even in a certain situation, the two transistors used to discharge the piezoelectric elements may be omitted to obtain the most simply circuit, such that the electric energy of the ultrasonic motor can further be feed back to the power supply such that the motor operates at two quadrants.

### Brief Description of the Drawings

Hereinafter, the present invention is further explained in detail referring to the examples and companying drawings, in which:
Fig. 1 is a schematic view showing a known ultrasonic motor and its polarization and driving ways;
Fig. 2 is a schematic view showing a dual H-bridge driving circuit driven by a square wave of two-phase in orthogonal;
Fig. 3a is a front structure view showing an integrated ultrasonic motor having shape of polyhedron and driven by screw threads, and an optical lens assembly driven directly;
Fig. 3b is a side structure view showing an integrated ultrasonic motor having shape of polyhedron and driven by screw threads, and an optical lens assembly driven directly;
Fig. 4 is a schematic view showing polarization and wiring of each piezoelectric element in the ultrasonic motor according to the present application;
Fig. 5a is a schematic circuit diagram showing that two legs of the dual H-bridge driving circuit as shown in Fig.2 is shorted through the common ground terminal of the ultrasonic motor;
Fig. 5b is a schematic circuit diagram showing that a voltage of two-phase in orthogonal is outputted from a three-phase bridge driving circuit;
Fig. 6a is a schematic view showing the waveform of the control signal for three legs;
Fig. 6b is a schematic view showing the output voltage waveform when the control signal of three legs is used;
Fig. 7 is a schematic circuit diagram showing that the driving circuit as shown in Fig.5b preceding which a boost DC/DC switching circuit is disposed;
Fig. 8a and 8b are views showing another integrated ultrasonic motor having polyhedron and driven by screw thread and an optical lens assembly driven directly by the integrated ultrasonic motor;
Fig. 9 is a schematic view showing polarization and wiring of each piezoelectric element of the ultrasonic motor driven by a voltage of three-phase according to the present invention;
Fig. 10a and 10b are a schematic waveform diagrams showing a control signal and an output voltage of three legs, respectively, when a voltage of three-phase in orthogonal is outputted a three-phase bridge driving circuit;
Fig. 11 is a schematic view showing polarization and wiring of each piezoelectric element of the ultrasonic motor driven by a two-phase direct ripple driving voltage of unipolarity;
Fig. 12 is a schematic view showing a circuit for outputting a two-phase direct ripple driving voltage of unipolarity;
Fig. 13 is a schematic waveform diagram showing control signal for each leg as shown in Fig.12;
Fig. 14 is a schematic view showing the driving circuit as shown in Fig.12 with a preceded boost DC/DC switching circuit;
Fig. 15 is a schematic view showing another circuit for outputting a two-phase direct ripple driving voltage of unipolarity;
Fig. 16 is a schematic view showing a circuit for outputting a two-phase direct ripple driving voltage of unipolarity, in which only two transistors are required; and
Fig. 17 is a schematic view showing a circuit for outputting a two-phase direct ripple driving voltage of unipolarity, in which the electric energy may be feed back.

### Detailed Description of the Invention

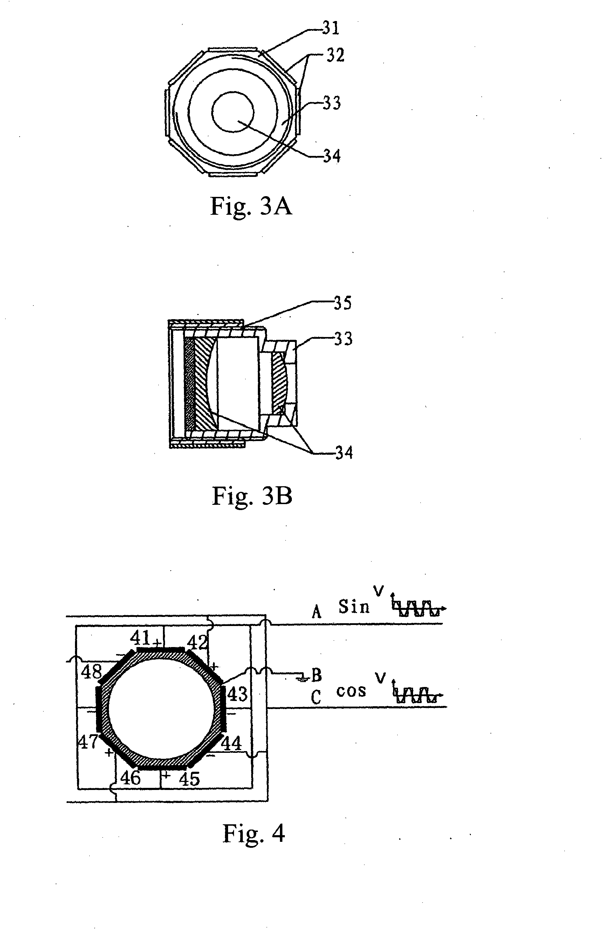

Figs 3a and 3b illustrate an integrated ultrasonic motor which has a shape of polyhedron and driven by screw threads, and an optical lens assembly driven directly by the integrated ultrasonic motor. The ultrasonic motor comprises a stator 31 and a rotor 33, each of which is provided with a central circular hole. The stator 31 has a hollow cylindrical metal body, on which is secured with a plurality of piezoelectric elements 32. The rotor 33 consists of a revolving shell within which an optical lens assembly 34 is embedded. The body of stator 31 is matched with the rotor 33 by screw thread 35. That is, the internal wall of the central circular hole of the stator 31 is configured with internal screw threads, while the external surface of the rotor 33 is configured with the corresponding external screw threads. The two screw threads have the same pitch. The body of the stator 31 has a shape of polyhedron or cylinder, as well as a hollow internal wall. The stator 31 is formed with metal materials such that the piezoelectric elements 32 arranged thereon have a common node which is called the common ground terminal. The integrated ultrasonic motor as shown in Fig.3a is polarized such that the adjacent piezoelectric elements in one two-two group are polarized in sequence of "+ + - -" (the two adjacent piezoelectric elements are polarized in forward direction, while the other two piezoelectric elements are polarized in backward direction). As shown in Fig.4, each of the piezoelectric elements 32 consists of piezoelectric patches 41-48 which are polarized in sequence of "+ + - - + + - -". Furthermore, a driving voltage for driving the piezoelectric element 32 is no longer applied across two piezoelectric patches, but applied across each piezoelectric patch and the metal internal ring (the common ground terminal). As a result, referring to Fig.4 again, within one group, a piezoelectric patch polarized in forward direction and another corresponding piezoelectric patch polarized in backward direction are no longer powered in series, but powered in parallel. That is, a power signal Asin ω*t* is applied across one of piezoelectric patches 41, 43, 45, 47 and the common ground terminal, and a power signal Acos *ωt* is applied across one of piezoelectric patches 42, 44, 46, 48 and the common ground terminal, wherein A is the amplitude of the voltage required to drive a single piezoelectric patch. Thus, in this driving method, the supply voltage required by the ultrasonic motor is half of that in other driving methods, and thus the amplitude of the driving voltage is decreased effectively.

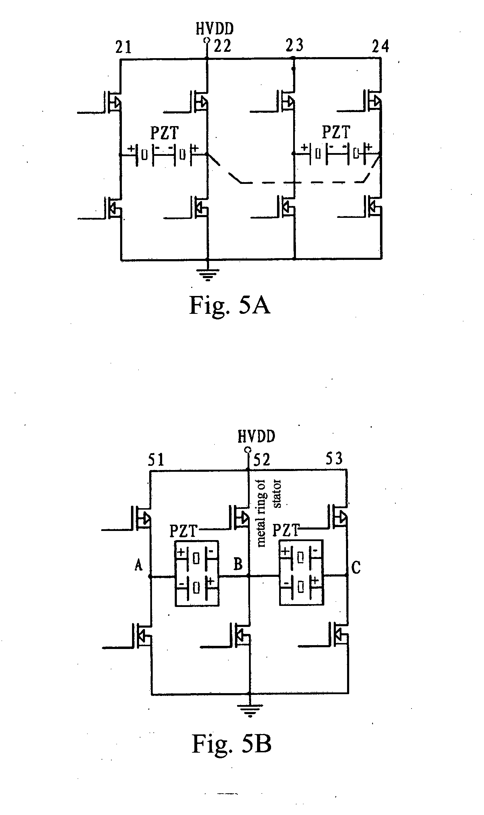

However, since the metal internal ring is short in the ultrasonic motor, the dual H-bridge solution as shown in Fig. 2 cannot be applied directly to the ultrasonic motor as shown in Fig.3 if the square wave voltage in orthogonal is applied instead of the sinusoidal wave voltage mentioned above. The reason is that, in this situation, as shown in Fig. 5, the metal internal ring of the ultrasonic motor shortly connects a leg 22 with a leg 24 at their midpoints, as shown with the dashed line in Fig.5a, and thus switching transistors on the legs 22 and 24 could not be sufficiently controlled, respectively.

Actually, due to the short connection of the metal internal ring, the circuit shown in Fig.5a may be converted to the circuit shown in Fig.5b in which only three effective legs are left, and as a result the circuit becomes a three-phase full-bridge circuit. To this end, the present invention provides a method for outputting the voltage of two-phase in orthogonal by controlling a three-phase bridge inverting circuit.

For the ultrasonic motor having the metal internal ring, with the piezoelectric elements thereof being connected to the common ground terminal, as shown in Fig.3a, the polarization as shown in Fig.4 is employed. In particular, one terminal of each piezoelectric patches 41, 43, 45 and 47 is connected to a first node A, and the other terminal of each piezoelectric patches 41, 43, 45 and 47 is connected to a second node B. Furthermore, one of the terminal of each piezoelectric patches 42, 44 46 and 48 is connected to a third node C, and the other terminal of each piezoelectric patches 42, 44, 46 and 48 is also connected to the second node B. The second node B is the common ground terminal for each piezoelectric element. In addition, the three-phase bridge inverting circuit as shown in Fig.5b is used as a driving circuit, which comprises a first leg 51, a second leg 52 and a third leg 53. The output terminals of these three legs are connected to the first node A, the second node B and the third node C, respectively;

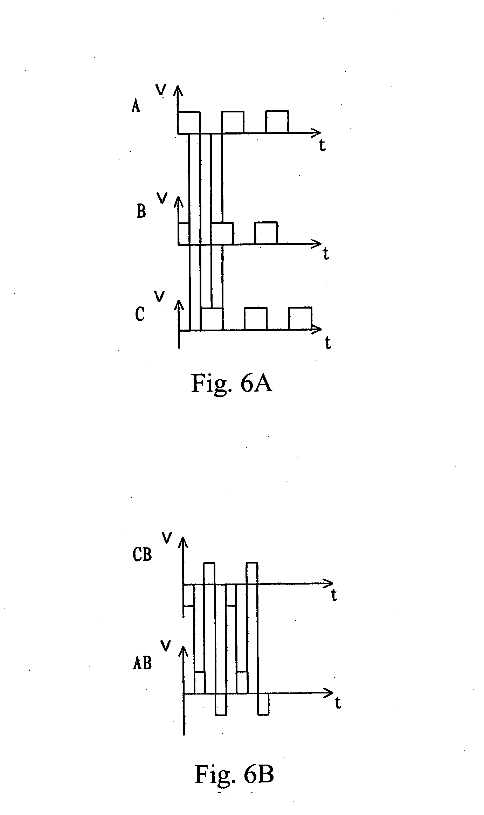

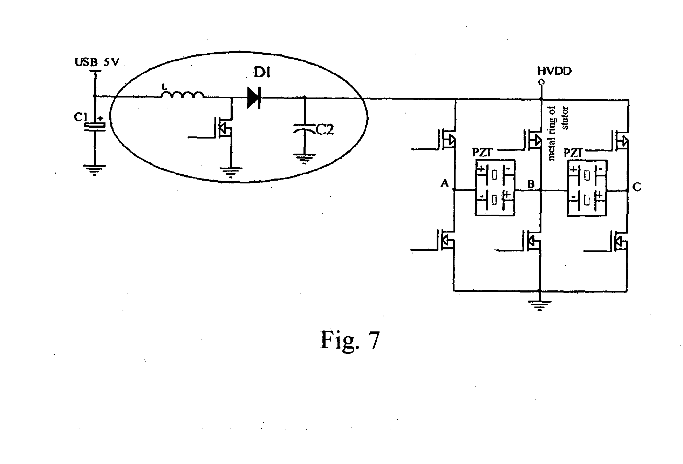

The method for controlling the three legs is as follows:
1. Each leg is applied with a square control signal of 180° (Fig.6a) at a frequency during which the ultrasonic motor will resonate. Upper and lower transistors of the each leg are conducted complementally. However, in practice, certain dead time is set to prevent the upper and lower transistors from conducting directly.
2. The original phase angle of the first leg 51 is 0 (Fig.6a-A). The phases of the third leg 53 and the first leg 51 are reversed (Fig.6a-C). The phase of the second leg 52 lags behind that of the first leg 51 of by an electric angle of 90°(Fig.6a-B). Alternatively, the phase of the second leg 52 advances that of the first leg 51 by an electric angle of 90°. Thus, the ultrasonic motor rotates reversely.
3. Two alternating square wave voltages (Fig.6a), which have a phase difference of 90°, are outputted from a note that is between the midpoint of the first leg 51 and the midpoint of the second leg 52 (AB), or between the midpoint of the third leg 53 and the midpoint of the second leg 52 (CB). The alternating square wave voltages have an amplitudes that are required by a single piezoelectric patch, and frequencies at which the ultrasonic motor may resonate.
4. A boost DC/DC switching circuit is disposed preceding the bridge inverting circuit, as shown in Fig.7, for inverting the supply voltage into a required voltage. For example, when the ultrasonic motor is powered by a battery, the supply voltage from the battery is raised as a voltage of specific value by the boost DC/DC switching circuit. The boost DC/DC switching circuit comprises an inductor L, a transistor, a diode D1 and a capacitor C2. In particular, one end of the inductor L is connected to the input terminal of the power supply, and the other end thereof is connected to the collector of the transistor and the anode of the diode D1. Furthermore, the transistor is connected between the output terminal of the inductor L and the ground terminal; the diode D1 is connected between the output terminal of the inductor L and the output terminal of the entire circuit; and the capacitor C2 is connected between the output terminal of the entire circuit and the ground terminal.

In addition, various PWMs such as SPWM and SVPWM may be utilized to replace the square wave control, such that the output waveform is more approximate to that of the sinusoidal wave.

The advantage of outputting a voltage of two-phase in orthogonal by using the three-phase bridge circuit is that only six switching transistors are required. The polarization in sequence of "++--" may decreases the voltage amplitude of the power supply. Thus the driving circuit is simplified and the efficiency thereof could be improved, and as a result the cost is reduced. It is particularly advantageous to use the ultrasonic in the handheld devices powered by batteries.

Another advantage of outputting a voltage of two-phase in orthogonal by using the three-phase bridge circuit is that this circuit may also output a voltage of three-phase in symmetry by using another control method. As a result, when the piezoelectric motor is of a three-phase structure or a two-phase/three-phase compatible structure, the motor may be driven by a voltage of three-phase. Therefore, a same set of driving circuit provides another option for the same motor. Alternatively, the same set of driving circuit may drive two or more rotors of the same kind.

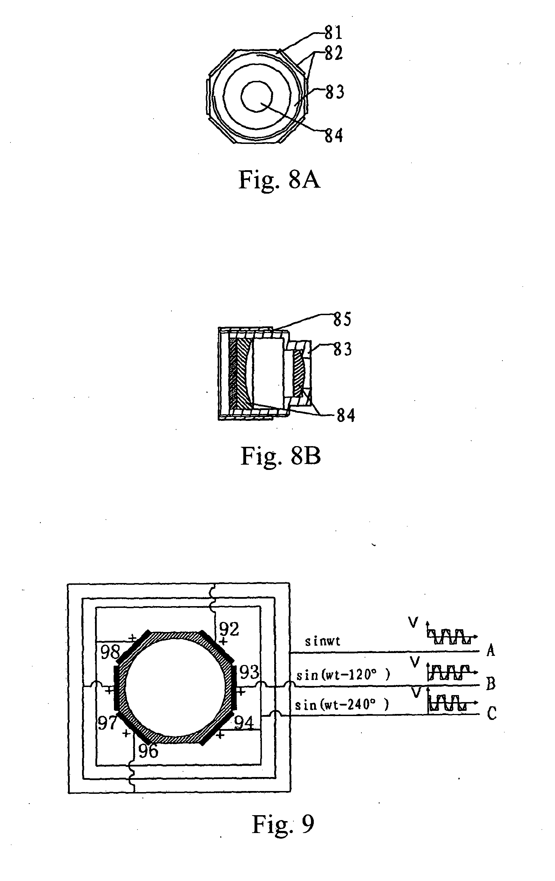

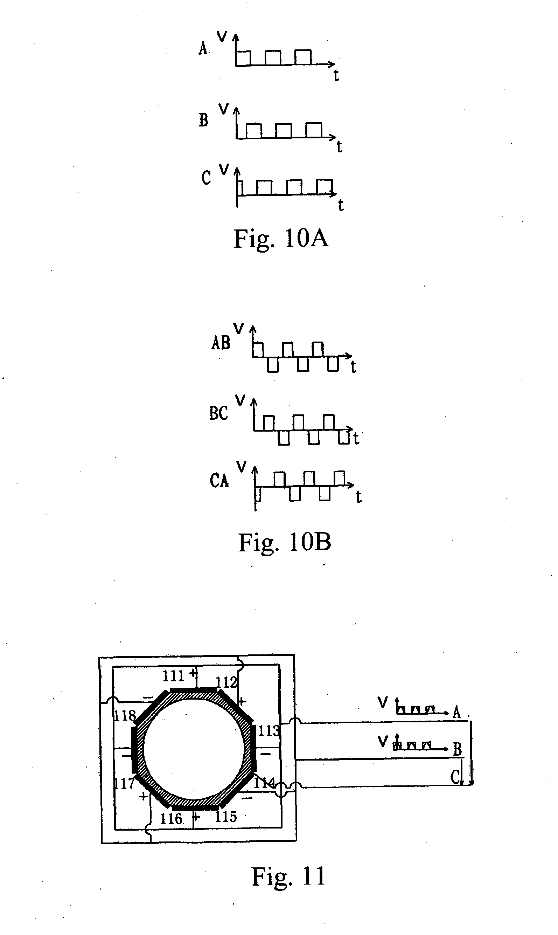

Referring to Fig.8a and 8b, an ultrasonic motor of three-phase structure shown therein comprises a stator 81 and a rotor 83, both of which are provided with central circular holes. The stator 81 has a hollow cylindrical metal body, which is secured with a plurality of piezoelectric elements 82. The rotor 83 consists of a revolving shell within which an optical lens assembly 84 is embedded. The substrate of stator 81 is matched with the rotor 83 through the screw thread 85. That is, the internal wall of the central circular hole of the stator 81 is provided with internal screw threads, while the external surface of the rotor 83 is provided with the corresponding external screw threads. The internal and external screw threads have the same pitch. The substrate of the stator 83 has a shape of polyhedron or cylinder, as well as a hollow internal wall. Due to the metal material of the stator 81, the piezoelectric elements on the stator 83 have a common node which is called the common ground terminal. As the ultrasonic motor is driven by a driving circuit of two-phase or three-phase, the number of piezoelectric elements thereon are generally multiple of 4 or 3. The structure in this example has six piezoelectric elements which are shown as piezoelectric patches 92, 93, 94, 96, 97 and 98 in Fig. 9. That is, two piezoelectric ceramic elements are further removed from the structure shown in Fig.4. When the ultrasonic motor is driven by a driving circuit of three-phase, the polarization and the wiring of the motor are shown in Fig.9, the driving circuit remains the same as that shown in Fig.5b, and the waveform of the driving signal is shown in Fig. 10.

For the ultrasonic motor having the metal internal ring, with the piezoelectric elements thereof being connected to the common ground terminal as shown in Fig.8, the polarization as shown in Fig.9 is employed. As is shown, the piezoelectric patches 92, 93, 94 96, 97 and 98 are polarized in sequence of "+ + + + + +". In particular, one terminal of each piezoelectric patches 92 and 96 is connected to a first node A, and the other terminal thereof is connected to the common ground terminal; one terminal of each piezoelectric patches 93 and 97 is connected to a second node B, and the other terminal thereof is connected to the common ground terminal. Furthermore, one terminal of each piezoelectric patches 94 and 98 is connected to a third node C, and the other terminal thereof is the common ground terminal. In addition, the three-phase bridge inverting circuit as shown in Fig.5b is used as the driving circuit, and comprises a first leg 51, a second leg 52 and a third leg 53. The output terminals of these three legs are connected to the first node A, the second node B and the third node C, respectively. The method for controlling the three legs is as follows:
1. Each leg uses a square control signal of 180° (Fig.10a) or 120° at a frequency at which the ultrasonic motor may resonate. Upper and lower transistors of the each leg are conducted complementally, however, in practice, certain dead time may be set to prevent the upper and lower transistors from conducting directly.
2. The original phase angle of the first leg 51 is 0 (10a-A). The phase of the second leg 52 lags behind that of the first leg 51 at an electric angle of 120°(Fig.10a-B), and the phase of the third leg 53 lags behind that of the second leg 52 by an electric angle of 120°(Fig.5a-C). Alternatively, the phase of the second leg 52 may advance that of the first leg 51 by an electric angle of 120°, and the phase of the third leg 53 may advance that of the second leg 52 by an electric angle of 120°, (not shown in the Figs.). At this condition, the ultrasonic motor rotates reversely.
3. Three alternating voltages (Fig.10b), which has phase differences of 120° with each other, are outputted from the midpoints of the first, second and third legs 51, 52 and 53 and connected in form of "Y". The two alternating voltages have amplitudes that are required by two piezoelectric patches in series, and frequencies at which the ultrasonic motor is in the resonance zone.
4. A boost DC/DC switching circuit is disposed preceding the bridge inverting circuit, for boosting the voltage up to the required value. For example, when the ultrasonic motor is powered by a battery, the voltage is boosted up to a voltage of a specific value by the boost DC/DC switching circuit (Fig.7).

Furthermore, various PWMs such as SPWM and SVPWM are utilized to replace the square wave control, such that the output waveform is more approximate to that of the sinusoidal wave signal.

The advantage of outputting a voltage of two-phase in orthogonal by using the three-phase bridge circuit is that only six switching transistors are required. The circuit is simple so as to be integrated and the input current to the circuit may be automatically balanced with little fluctuation of the output torque, and abroad application prospect.

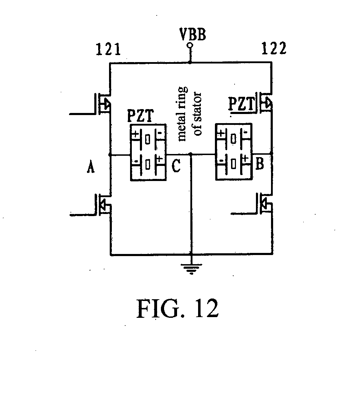

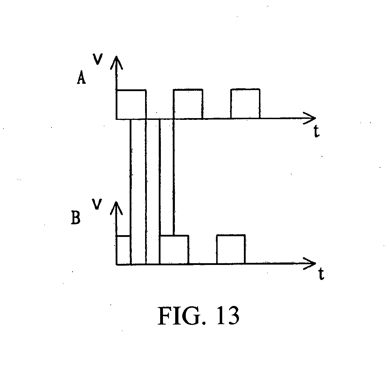

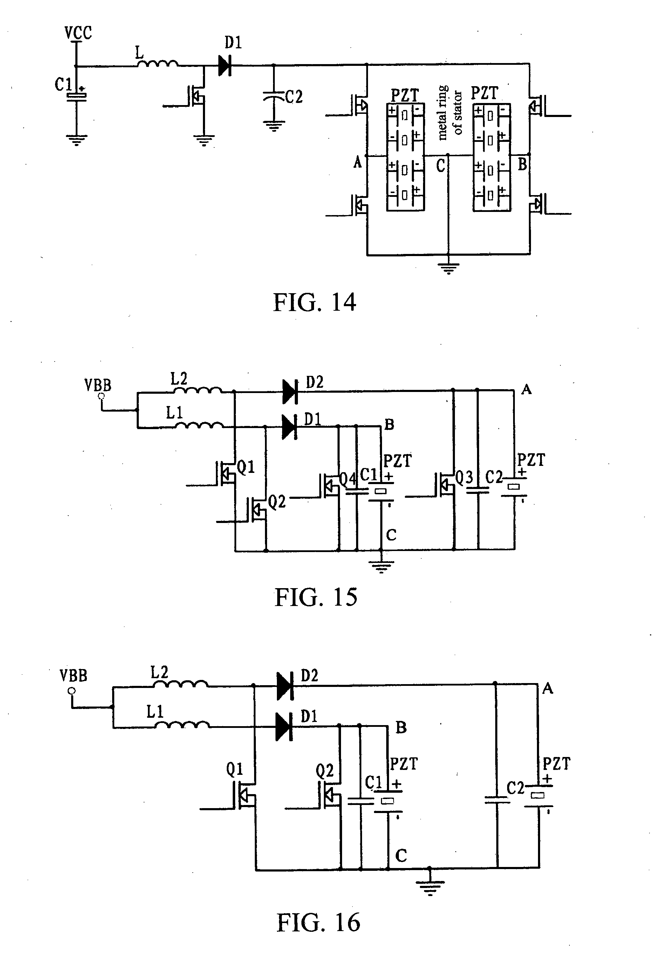

In the traditional ultrasonic motor control method and the above improved ultrasonic motor control method, the power supplies used are both ambipolar, that is, the output voltages are alternating voltages. As a result, in implementation of the circuit, an inverting circuit must be employed. The number of the transistors which are required by the inverting circuit is 8 (for a dual H-bridge) or 6 (for the output of two-phase in orthogonal of the three-phase bridge). The output frequency of the inverting circuit is above the range of the audio frequency, such as 15 kHz to 200 kHz. This range is suitable for the passive elements in the circuit, such as inductor and capacitor. In order to further improve the operating frequency of the passive element in the circuit and decrease the volume of the power supply, the present invention also provides a method for powering the ultrasonic motor by the power supply of unipolarity, as shown in Fig.11. For the ultrasonic motor having the metal internal ring as shown in Fig.3, the polarization in sequence of "+ + - -" is still employed, in which the piezoelectric patches 112, 113, 114, 115, 116, 117, 118 and 111 are polarized in sequence of "+ + - - + + - -". In particular, one terminal of each piezoelectric patches 112, 114, 116 and 118 is connected to a first node A, and the other terminal thereof is connected to a third node C. Furthermore, one terminal of each piezoelectric patches 111, 113, 115 and 117 is connected to a second node B, and the other terminal thereof is connected the third node C. The third node C is the common ground terminal. The output stage of the power supply is powered by a dual half-bridge direct ripple supply voltage, the circuit of which is shown in Fig.12, comprising a first leg 121 and a second leg 122. The output terminals of the two legs are connected with the first node A and the second node B, respectively. The method for controlling each leg is as follow:
1. Upper transistor of each leg uses a square control signal of 180° (Fig. 13) or other angles. Upper and lower transistors of the leg are conducted complementally (in practice, certain dead time is set to prevent the upper and lower transistors from conducting directly).
2. The original phase angle of the first leg 121 is 0 (Fig.13-A). The phase of the second leg 122 may lag behind that of the first leg 121 by an electric angle of 90° (Fig.13-B). Alternatively, the phase of the second leg 122 may advance that of the first leg 121 by an electric angle of 90° (not shown in Fig.13). Accordingly, the ultrasonic motor rotates reversely.
3. Two DC ripple square wave voltages with a phase difference a quarter of the period was retrieved from a note between the midpoint of the first leg 121 and the common ground terminal, or between the midpoint of the second leg 122 and the common ground terminal. Each of the two DC ripple square wave voltages has amplitude that is equal to the output signal of the DC/DC switching circuit, and a frequency at which the ultrasonic motor may resonate.
4. A boost DC/DC switching circuit is disposed preceding the dual half-bridge DC ripple circuit for boosting the voltage to the required voltage. For example, when the ultrasonic motor is powered by the battery, the voltage is boosted up to a voltage of specific value by the boost DC/DC switching circuit, as shown in Fig. 14.

Furthermore, various PWMs such as SPWM and SVPWM are utilized to replace the square wave, such that the output waveform of the dual half-bridge DC circuit is more approximate to that of the sinusoidal wave.

Although the circuit shown in Fig.12 is a unipolarity output circuit, four transistors are still used to achieve two ripple DC outputs. With a preceding boost DC/DC switching circuit, total five transistors are required for the boost DC/DC switching circuit. According to the working principle for the unipolarity circuit, it could be understood that at least one transistor is required to generate one direct output, and two transistors for two direct outputs.

As shown in Fig.15, the driving circuit is simplified into two boost DC/DC switching circuits, which output two DC ripple signals with a phase difference of a quarter of period. Each boost DC/DC switching circuit comprises an inductor, a transistor, a diode and a capacitor. In particular, one end of the inductor is connected to the input terminal of the power supply, and the other end thereof is connected to the collector of the transistor and the anode of the diode. Furthermore, the transistor is connected between the output terminal of the inductor and the ground terminal. In addition, the diode is connected between the output terminal of the inductor and the output terminal of the entire circuit, and the capacitor is connected between the output terminal of the entire circuit and the ground terminal. In order to output a ripple signal, transistors Q3 and Q4 are, respectively, connected between the output terminal of the entire circuit and the ground terminal, for discharging the capacitors of the piezoelectric elements.

The method only requires four transistors together with proper peripheral circuits, so as to drive the ultrasonic motor. Furthermore, as a DC signal is outputted, the switching frequency of the transistor could be improved significantly, such as to hundreds of kHz or million of kHz, such that the induction and capacitance required by the boost DC/DC switching circuit and its volume are decreased to promote the miniaturization and integration of the driving circuit.

In a certain situation, the two transistors Q3 and Q4 for discharging the piezoelectric elements may be omitted, such that the most simply circuit as shown in Fig.16 is achieved.

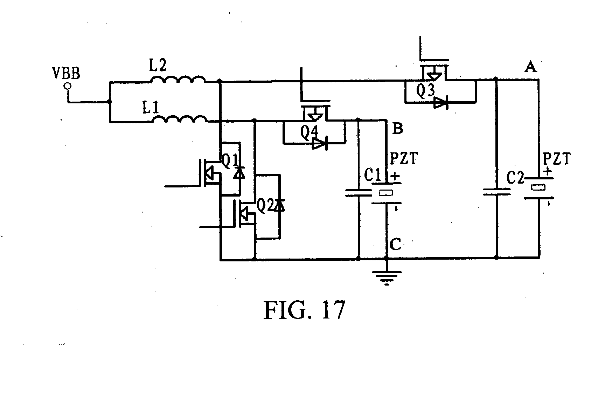

Alternatively, while employing a circuit as shown in Fig.17, one diode may be in reverse parallel connection with the transistor of each boost circuit. And one transistor is in reverse parallel connection with the diode of each boost circuit. The electric energy of the piezoelectric element can be feed back to the input power supply by controlling the inverse parallel transistor, and as a result the efficiency of the circuit could be improved.

The above mentioned circuit powered by the unipolarity DC ripple voltage could replace the conventional alternating output. With the DC output voltage, the switching frequency of the transistor could be improved significantly, such as, to hundreds of kHz to even millions of Hz, so as to promote the miniaturization and integration of the driving circuit.

In the following, example ultrasonic motors are described.

### Example 1

According to Fig. 3, the ultrasonic motor in the example comprises a stator 31 and a rotor 33, both of which are provided with a central circular hole. The stator 31 has a hollow cylindrical metal body and a plurality of piezoelectric elements 32 secured thereon. The rotor 33 comprises a revolving shell within which an optical lens assembly 34 is embedded. The body of stator 31 is matched with the rotor 33 through the screw thread 35. That is, the internal wall of the central circular hole of the stator 31 is provided with internal screw thread, while the external surface of the rotor 33 is provided with the corresponding external screw thread. The two threads have the same pitch and a nominal diameter. The body of the stator 31 has a shape of polyhedron or cylinder, as well as a hollow internal wall. Due to the metal material of the stator 31, the piezoelectric elements 32 thereon have a common node, which is called the common ground terminal. The surface of the screw thread is under wear-resistant treatment or coated with wear-resistant material. The section of the screw thread may be any one or the combination of triangle, trapezoid, rectangle or convexity. The route of the screw thread may be continuous curve, sectional curve or a curve of particular trajectory.

The polarization of the piezoelectric elements and the wiring of the driving power supply are shown in Fig.4. Piezoelectric patches 41-48 are polarized in sequence of "+ + - - + + - -", and then connected to the midpoints of the first and third legs 51 and 53 in the circuit as shown in Fig.5b. The midpoint of the second leg 52 is connected to the common ground terminal of the stator. The piezoelectric patches are then activated and generate vibrating traveling waves rotating in the clockwise direction. The traveling waves drive the rotor to rotate under the friction therebetween. When the stator and rotor are matched through the screw thread, the rotor may also move axially at the time of rotating. Accordingly, the optical lens assembly on the rotor is driven directly to change its location so as to adjust the focus of the lens.

In this example, the method for controlling the first leg 51, the second leg 52 and the third leg 53 is shown in Fig.6a, while Fig.6b shows the actual waveforms of U_{AB} and U_{CB} of the voltages applied across each piezoelectric element and the common ground terminal.

### Example 2

The solution according to Example 2 differs from that of the example 1 in that only the circuit for driving the power supply is different. As shown in Fig. 7, a boost DC/DC switching circuit is disposed preceding the bridge inverting circuit as shown in Fig.5b so as to boost the supply voltage. For example, while using a battery as the power supply, the voltage from the battery is boosted by the boost DC/DC switching circuit to a voltage of particular value.

Of course, if the supply voltage is higher than the driving voltage required by the piezoelectric element, the voltage could be decreased by a buck DC/DC circuit similarly.

### Example 3

The ultrasonic motor according to Example 3 of the present application is shown in Fig.8. The motor according to the example 3 of the present application differs from that in Fig.3 in that only the number of the piezoelectric elements is different. In particular, the motor according to the example 3 of the present application has 6 piezoelectric elements, such that the motor is driven using a power supply of three-phase as will be discussed below.

The polarization of the piezoelectric elements and the wiring of the driving power supply are shown in Fig.9. Piezoelectric patches 92-94 and 96-98 are all polarized in forward direction, and then connected to the midpoints of the first second and third legs 51, 52 and 53 in the circuit as shown in Fig.5b. After that, the piezoelectric patches are activated and generate vibrating traveling waves rotating in the clockwise direction. The traveling waves drive the rotor to rotate under the friction therebetween. When the stator and rotor are matched through the screw thread, the rotor may also move axially at the time of rotating.

In this example, the method for controlling the first leg 51, the second leg 52 and the third leg 53 is shown in Fig.10a, while Fig.10b shows the actual waveforms of U_{AB}, U_{BC} and U_{CA} of the voltages applied across each piezoelectric element and the common ground terminal.

### Example 4

The configuration of the ultrasonic motor according to Example 4 of the present application and the polarization thereof are the same as the example 1. The wiring of the driving power supply for the motor according to the example 4 is shown in Fig.11. Piezoelectric patches are connected to the midpoints of the first and second legs 121 and 122 in the circuit as shown in Fig.12. Meanwhile, the common ground terminal of the motor is connected with the ground terminal of the power supply. Then the piezoelectric patches are activated and generate vibrating traveling waves rotating in the clockwise direction. The traveling waves drive the rotor to rotate under the friction therebetween. When the stator and rotor are matched through the screw thread, the rotor may also move axially at the time of rotating.

In this example, the method for controlling the first and second legs 121 and 122 is shown in Fig.13.

### Example 5

Example 5 differs from Example 4 in that only the circuit for driving the power supply is different. As shown in Fig.14, a boost DC/DC switching circuit is disposed preceding the bridge circuit as shown in Fig.13 to boost the supply voltage. For example, while using a battery as the power supply, the voltage is boosted by the boost DC/DC switching circuit to a voltage of particular value.

Of course, if the supply voltage is higher than the driving voltage required by the piezoelectric elements, the voltage could be decreased by a buck DC/DC circuit similarly.

### Example 6

In Example 6, the ultrasonic motor and the polarization thereof are the same as the example 1. The wiring of the circuit for driving the power supply is shown in Fig.15. The piezoelectric patches are connected to the output terminals of the circuit as shown in Fig.15, and the common ground terminal of the motor is connected with the ground terminal of the power supply. Then the piezoelectric patches are activated and generate vibrating traveling waves rotating in the clockwise direction. The traveling waves drive the rotor to rotate under the friction therebetween. When the stator and rotor is matched through the thread, the rotor may also move axially at the time of rotating.

### Example 7

The solution according to Example 7 as shown in Fig.16 differs from that according to the example 6 only in the circuit for driving the driving power supply.

### Example 8

The solution according to Example 8 as shown in Fig.17 differs from that according to the example 6 only in the circuit of the driving power supply.

## Claims

1. A method for driving an ultrasonic motor utilizing a three-phase bridge inverting circuit, the three-phase bridge inverting circuit comprising a first leg (51), a second leg (52) and a third leg (53), the ultrasonic motor comprising a plurality of piezoelectric elements (PZT) divided into two-two groups each comprising a first piezoelectric element and a second piezoelectric element, and every four adjacent piezoelectric elements (41-44, 45-48) are polarized in sequence of "++--", the method comprising:
connecting one terminal of the first piezoelectric element (41; 43; 45; 47) to the output terminal (A) of the first leg (51), the other terminal of the first piezoelectric element to a common terminal (B), wherein the common terminal (B) is the output terminal of the second leg;
connecting one terminal of the second piezoelectric element (42; 44; 46; 48) to the output terminal (C) of the third leg (53), the other terminal of the second piezoelectric element to the common terminal (B),
controlling the first, second and third legs such that a phase of a first alternating voltage between the output terminals of the first and second legs differs from that of a second alternating voltage between the output terminals of the third and second legs by an angle of 90°, and each of the first and second alternating voltages has a frequency at which the ultrasonic motor resonates.

2. The method according to claim 1, wherein, each of the first, second and third legs comprises a first transistor and a second transistor in series, and
wherein, the step of controlling the first, second and third legs comprises:
controlling the first, second and third legs with signals so that the first transistor and the second transistor of each of the first, second and third legs are conductive complementarily, wherein the signal for controlling the second leg has a phase which differs from that of the signal for controlling the first leg by an angle of 90°, and the signal for controlling the third leg has a phase which is reversed relative to that of the signal for controlling the first leg.

3. The method according to claim 1, further comprising:
disposing a DC/DC switching circuit preceding the three-phase bridge inverting circuit, such that the supply voltage is converted to a voltage required by each of the piezoelectric elements.

4. A method for driving an ultrasonic motor utilizing a boost DC/DC switching circuit, the boost DC/DC switching circuit comprising a first DC/DC switching circuit and a second DC/DC switching circuit, the ultrasonic motor comprising a plurality of piezoelectric elements divided into two-two groups each comprising a first piezoelectric element and a second piezoelectric element, wherein every four adjacent piezoelectric elements are polarized in sequence of "++--", the method comprising:
connecting one terminal of the first piezoelectric element to the output terminal (A) of the first DC/DC switching circuit, the other terminal of the first piezoelectric element to a common ground terminal (C);
connecting one terminal of the second piezoelectric element to the output terminal (B) of the second DC/DC switching circuit, the other terminal of the second piezoelectric element to the common ground terminal (C); and
controlling the first and second DC/DC switching circuits to work at a particular ripple frequency so as to output a first and second DC ripple voltages respectively,
wherein, the first DC ripple voltage has a frequency which is the same as that of the second DC ripple voltage, but a phase which differs from that of the second DC ripple voltage by a quarter of a period, and wherein the first and second DC ripple voltages have amplitudes for output voltages of the first and second boost DC/DC switching circuits, and a ripple frequency at which the ultrasonic motor resonates.

5. The method according to claim 4, wherein, each of the first and second DC/DC switching circuits comprises an inductor, a first transistor and a first diode, one end of the inductor being connected to the output terminal of the power supply, the other end of the inductor being connected to the collector of the first transistor and the anode of the first diode, the first transistor being connected between the output terminal of the inductor and the ground terminal, and the first diode being connected between the output terminal of the inductor and the output terminal of the entire circuit, a second transistor being connected between an output terminal of each of the first and second DC/DC switching circuits and the ground terminal, a second diode being in reverse parallel connection with the first transistor, the method further comprising:
controlling the second transistor to periodically discharge each of the piezoelectric elements at the ripple frequency.

6. An ultrasonic motor, comprising:
a rotor;
a stator comprising a hollow cylindrical metal body, engaged with the rotor by screw threads, wherein a plurality of piezoelectric elements divided into two-two groups each formed of a first piezoelectric element and a second piezoelectric element are provided on the stator, wherein every four adjacent piezoelectric elements (41-44, 45-48) are configured to be polarized in sequence of "++--", and the stator forms the common terminal for the plurality of piezoelectric elements; and
a three-phase bridge inverting circuit comprising a first leg (51), a second leg (52) and a third leg (53),
wherein, one terminal of the first piezoelectric element (41, 43, 45, 47) is connected to the output terminal (A) of the first leg (51), the other terminal of the first piezoelectric element being connected to a common terminal(B), wherein the common terminal is the output terminal of the second leg, wherein, one terminal of the second piezoelectric element is connected to the output terminal (C) of the third leg (53), the other terminal of the second piezoelectric element being connected to the common terminal (B) ; and
wherein, a phase of a first alternating voltage between the output terminals of the first and second legs differs from that of a second alternating voltage between the output terminals of the third and second legs by an angle of 90°; and each of the first and second alternating voltages has a frequency at which the ultrasonic motor resonates.

7. An ultrasonic motor, comprising:
a rotor;
a stator comprising a hollow cylindrical metal body, engaged with the rotor by screw threads, wherein a plurality of piezoelectric elements divided into two-two groups each comprising a first piezoelectric element and a second piezoelectric element are provided on the stator, wherein every four adjacent piezoelectric elements are polarized in sequence of "++--", and the stator forms a common ground terminal (C) for the plurality of piezoelectric elements;
a first DC/DC switching circuit; and
a second DC/DC switching circuit,
wherein, one terminal of the first piezoelectric element is connected to the output terminal (A) of the first DC/DC switching circuit, the other terminal of the first piezoelectric element being connected to the common ground terminal (C); and wherein one terminal of the second piezoelectric element is connected to the output terminal (B) of the second DC/DC switching circuit, the other terminal of the second piezoelectric element being connected to the common ground terminal (C);
wherein, the first and second DC/DC switching circuits are configured to output a first and second DC/DC ripple voltages through respective output terminals; and
wherein, the first DC ripple voltage has a frequency which is the same as that of the second DC ripple voltage, but a phase differs from that of the second DC ripple voltage by a quarter of a period, and wherein the first and second DC ripple voltages have amplitudes for output voltages of the first and second DC/DC switching circuits, and a ripple frequency at which the ultrasonic motor resonates.

## Patentansprüche

1. Verfahren zum Treiben eines Ultraschallmotors unter Verwendung einer dreiphasigen Brücken-Umkehrschaltung, wobei die dreiphasige Brückenumkehrschaltung einen ersten Abschnitt (51), einen zweiten Abschnitt (52) und einen dritten Abschnitt (53) aufweist, wobei der Ultraschallmotor mehrere piezoelektrische Elemente (PZT) aufweist, welche in zwei Zweier-Gruppen aufgeteilt sind, die jeweils ein erstes piezoelektrisches Element und ein zweites piezoelektrisches Element aufweisen, und wobei jeweils vier benachbarte piezoelektrische Elemente (41-44, 45-48) in der Abfolge "++--" polarisiert sind, wobei das Verfahren aufweist:
das Verbinden eines Anschlusses des ersten piezoelektrischen Elements (41; 43; 45; 47) mit dem Ausgangsanschluss (A) des ersten Abschnitts (51) und des anderen Anschlusses des ersten piezoelektrischen Elements mit einem gemeinsamen Anschluss (B), wobei der gemeinsame Anschluss (B) der Ausgangsanschluss des zweiten Abschnitts ist;
das Verbinden eines Anschlusses des zweiten piezoelektrischen Elements (42; 44; 46; 48) mit dem Ausgangsanschluss (C) des dritten Abschnitts (53) und des anderen Anschlusses des zweiten piezoelektrischen Elements mit einem gemeinsamen Anschluss (B);
das Steuern des ersten zweiten und dritten Abschnitts derart, dass eine Phase einer ersten Wechselspannung zwischen den Ausgangsanschlüssen des ersten und des zweiten Abschnitts von derjenigen einer zweiten Wechselspannung zwischen den Ausgangsanschlüssen des dritten und des zweiten Abschnitts um einen Winkel von 90° verschieden ist, und dass sowohl die erste, als auch die zweite Wechselspannung eine Frequenz aufweist, bei welcher der Ultraschallmotor schwingt.

2. Verfahren nach Anspruch 1, bei welcher sowohl der erste, als auch der zweite und der dritte Abschnitt einen ersten Transistor und einen zweiten Transistor in Reihe aufweist, und
wobei der Schritt des Steuerns des ersten des zweiten und des dritten Abschnitts aufweist:
das Steuern des ersten, des zweiten und des dritten Abschnitts durch Signale, so dass der erste Transistor und der zweite Transistor sowohl des ersten, als auch des zweiten und des dritten Abschnitts komplementär leitfähig sind, wobei das Signal zum Steuern des zweiten Abschnitts eine Phase aufweist, welche von derjenigen des Signals zum Steuern des ersten Abschnitts um einen Winkel von 90° verschieden ist, und das Signal zum Steuern des dritten Abschnitts eine Phase aufweist, welche in Bezug auf diejenige des Signals zum Steuern des ersten Abschnitts umgekehrt ist.

3. Verfahren nach Anspruch 1, ferner mit:
dem Anordnen einer DC/DC-Wechselschaltung vor der dreiphasigen Brücken-Umkehrschaltung, derart, dass die Versorgungsspannung in eine von jedem der piezoelektrischen Elemente benötigte Spannung umgewandelt wird.

4. Verfahren zum Treiben eines Ultraschallmotors unter Verwendung einer Boost-DC/DC-Wechselschaltung, wobei die Boost-DC/DC-Wechselschaltung eine erste DC/DC-Wechselschaltung und eine zweite DC/DC-Wechselschaltung aufweist, wobei der Ultraschallmotor mehrere piezoelektrische Elemente aufweist, welche in zwei Zweier-Gruppen aufgeteilt sind, die jeweils ein erstes piezoelektrisches Element und ein zweites piezoelektrisches Element aufweisen, und wobei jeweils vier benachbarte piezoelektrische Elemente (41-44, 45-48) in der Abfolge "++--" polarisiert sind, wobei das Verfahren aufweist:
das Verbinden eines Anschlusses des ersten piezoelektrischen Elements mit dem Ausgangsanschluss (A) der ersten DC/DC-Wechselschaltung und des anderen Anschlusses des ersten piezoelektrischen Elements mit einem gemeinsamen Masseanschluss (C);
das Verbinden eines Anschlusses des zweiten piezoelektrischen Elements mit dem Ausgangsanschluss (B) der zweiten DC/DC-Wechselschaltung und des anderen Anschlusses des zweiten piezoelektrischen Elements mit einem gemeinsamen Masseanschluss (C), und
das Steuern der ersten und der zweiten DC/DC-Wechselschaltung derart, dass sie mit einer bestimmten Brummfrequenz arbeiten, um so eine erste bzw. eine zweite Brummgleichspannung auszugeben,
wobei die erste Brummgleichspannung eine Frequenz, welche gleich derjenigen der zweiten Brummgleichspannung ist, jedoch eine Phase aufweist, die von derjenigen der zweiten Brummgleichspannung um ein Viertel einer Periode abweicht, und wobei die erste und die zweite Brummgleichspannung Amplituden für Ausgangsspannungen der ersten und der zweiten Boost-DC/DC-Wechselschaltung und eine Brummfrequenz aufweisen, bei welcher der Ultraschallmotor schwingt.

5. Verfahren nach Anspruch 4, bei welchem sowohl die erste, als auch die zweite DC/DC-Wechselschaltung einen Induktor, einen ersten Transistor und eine erste Diode aufweist, wobei ein Ende des Induktors mit dem Ausgangsanschluss der Stromversorgung verbunden ist, wobei das andere Ende des Induktors mit dem Kollektor des ersten Transistors und der Anode der ersten Diode verbunden ist, wobei der erste Transistor zwischen dem Ausgangsanschluss des Induktors und dem Masseanschluss verbunden ist, und wobei die erste Diode zwischen dem Ausgangsanschluss des Induktors und dem Ausgangsanschluss der Gesamtschaltung verbunden ist, wobei ein zweiter Transistor zwischen einem Ausgangsanschluss sowohl der ersten, als auch der zweiten DC/DC-Wechselschaltung und dem Masseanschluss verbunden ist, wobei eine zweite Diode mit dem ersten Transistor umgekehrt parallel verbunden ist, wobei das Verfahren ferner aufweist:
das Steuern des zweiten Transistors zum periodischen Entladen jedes der piezoelektrischen Elemente mit der Brummfrequenz.

6. Ultraschallmotor mit:
einem Rotor;
einem Stator mit einem hohlzylindrischen Metallkörper, der mit dem Rotor durch Schraubgewinde in Eingriff ist, wobei mehrere piezoelektrische Elemente, welche in zwei Zweier-Gruppen aufgeteilt sind, die jeweils ein erstes piezoelektrisches Element und ein zweites piezoelektrisches Element aufweisen, an dem Stator vorgesehen sind, wobei jeweils vier benachbarte piezoelektrische Elemente (41-44, 45-48) derart konfiguriert sind, dass sie in der Abfolge "++--" polarisiert sind, und wobei der Stator den gemeinsamen Anschluss für die mehreren piezoelektrischen Elemente bildet; und
einer dreiphasigen Brücken-Umkehrschaltung mit einem ersten Abschnitt (51), einem zweiten Abschnitt (52) und einem dritten Abschnitt (53),
wobei ein Anschluss des ersten piezoelektrischen Elements (41; 43; 45; 47) mit dem Ausgangsanschluss (A) des ersten Abschnitts (51) und der andere Anschluss des ersten piezoelektrischen Elements mit einem gemeinsamen Anschluss (B) verbunden ist, wobei der gemeinsame Anschluss (B) der Ausgangsanschluss des zweiten Abschnitts ist, wobei ein Anschluss des zweiten piezoelektrischen Elements mit dem Ausgangsanschluss (C) des dritten Abschnitts (53) und der andere Anschluss des zweiten piezoelektrischen Elements mit dem gemeinsamen Anschluss (B) verbunden ist; und
wobei eine Phase einer ersten Wechselspannung zwischen den Ausgangsanschlüssen des ersten und des zweiten Abschnitts von derjenigen einer zweiten Wechselspannung zwischen den Ausgangsanschlüssen des dritten und des zweiten Abschnitts um einen Winkel von 90° verschieden ist, und sowohl die erste, als auch die zweite Wechselspannung eine Frequenz aufweist, bei welcher der Ultraschallmotor schwingt.

7. Ultraschallmotor mit:
einem Rotor;
einem Stator mit einem hohlzylindrischen Metallkörper, der mit dem Rotor durch Schraubgewinde in Eingriff ist, wobei mehrere piezoelektrische Elemente, welche in zwei Zweier-Gruppen aufgeteilt sind, die jeweils ein erstes piezoelektrisches Element und ein zweites piezoelektrisches Element aufweisen, an dem Stator vorgesehen sind, wobei jeweils vier benachbarte piezoelektrische Elemente derart konfiguriert sind, dass sie in der Abfolge "++--" polarisiert sind, und wobei der Stator einen gemeinsamen Masseanschluss (C) für die mehreren piezoelektrischen Elemente bildet;
einer ersten DC/DC-Wechselschaltung; und
einer zweiten DC/DC-Wechselschaltung,
wobei ein Anschluss des ersten piezoelektrischen Elements mit dem Ausgangsanschluss (A) der ersten DC/DC-Wechselschaltung und der andere Anschluss des ersten piezoelektrischen Elements mit dem gemeinsamen Masseanschluss (C) verbunden ist; und wobei ein Anschluss des zweiten piezoelektrischen Elements mit dem Ausgangsanschluss (B) der zweiten DC/DC-Wechselschaltung und der andere Anschluss des zweiten piezoelektrischen Elements mit dem gemeinsamen Masseanschluss (C) verbunden ist;
wobei die erste und die zweite DC/DC-Wechselschaltung derart konfiguriert sind, dass sie eine erste und eine zweite Brummgleichspannung über jeweilige Ausgangsanschlüsse ausgeben; und
wobei die erste Brummgleichspannung eine Frequenz, welche gleich derjenigen der zweiten Brummgleichspannung ist, jedoch eine Phase aufweist, die von derjenigen der zweiten Brummgleichspannung um ein Viertel einer Periode abweicht, und wobei die erste und die zweite Brummgleichspannung Amplituden für Ausgangsspannungen der ersten und der zweiten DC/DC-Wechselschaltung und eine Brummfrequenz aufweisen, bei welcher der Ultraschallmotor schwingt.

## Revendications

1. Procédé d'entraînement d'un moteur ultrasonique en utilisant un circuit d'inversion de pont triphasé, le circuit d'inversion de pont triphasé comprenant une première branche (51), une deuxième branche (52) et une troisième branche (53), le moteur ultrasonique comprenant une pluralité d'éléments piézoélectriques (PZT) divisés en groupes deux-deux comprenant chacun un premier élément piézoélectrique et un deuxième élément piézoélectrique, et tous les quatre éléments piézoélectriques adjacents (41-44, 45-48) sont polarisés en séquence de « ++-- », le procédé comprenant :
la liaison d'une borne du premier élément piézoélectrique (41 ; 43 ; 45 ; 47) à la borne de sortie (A) de la première branche (51) et la liaison de l'autre borne du premier élément piézoélectrique à une borne commune (B), dans lequel la borne commune (B) est la borne de sortie de la deuxième branche ;
la liaison d'une borne du deuxième élément piézoélectrique (42 ; 44 ; 46 ; 48) à la borne de sortie (C) de la troisième branche (53) et la liaison de l'autre borne du deuxième élément piézoélectrique à la borne commune (B),
la commande des première, deuxième et troisième branches de sorte qu'une phase d'une première tension alternative entre les bornes de sortie des première et deuxième branches diffère de celle d'une deuxième tension alternative entre les bornes de sortie des troisième et deuxième branches d'un angle de 90°, et chacune des première et deuxième tensions alternatives a une fréquence à laquelle le moteur ultrasonique résonne.

2. Procédé selon la revendication 1, dans lequel chacune des première, deuxième et troisième branches comprend un premier transistor et un deuxième transistor en série, et
dans lequel l'étape de commande des première, deuxième et troisième branches comprend :
la commande des première, deuxième et troisième branches avec des signaux de sorte que le premier transistor et le deuxième transistor de chacune des première, deuxième et troisième branches soient conducteurs de manière complémentaire, dans lequel le signal pour commander la deuxième branche a une phase qui diffère de celle du signal pour commander la première branche d'un angle de 90°, et le signal pour commander la troisième branche a une phase qui est inversée par rapport à celle du signal pour commander la première branche.

3. Procédé selon la revendication 1, comprenant en outre :
la disposition d'un circuit de commutation CC/CC précédant le circuit d'inversion de pont triphasé, de sorte que la tension d'alimentation soit convertie en une tension requise par chacun des éléments piézoélectriques.

4. Procédé d'entraînement d'un moteur ultrasonique en utilisant un circuit de commutation CC/CC d'augmentation, le circuit de commutation CC/CC d'augmentation comprenant un premier circuit de commutation CC/CC et un deuxième circuit de commutation CC/CC, le moteur ultrasonique comprenant une pluralité d'éléments piézoélectriques divisés en groupes deux-deux comprenant chacun un premier élément piézoélectrique et un deuxième élément piézoélectrique, dans lequel tous les quatre éléments piézoélectriques adjacents sont polarisés en séquence de « ++-- », le procédé comprenant :
la liaison d'une borne du premier élément piézoélectrique à la borne de sortie (A) du premier circuit de commutation CC/CC et la liaison de l'autre borne du premier élément piézoélectrique à une borne de masse commune (C) ;
la liaison d'une borne du deuxième élément piézoélectrique à la borne de sortie (B) du deuxième circuit de commutation CC/CC et la liaison de l'autre borne du deuxième élément piézoélectrique à la borne de masse commune (C) ; et
la commande des premier et deuxième circuits de commutation CC/CC pour fonctionner à une fréquence d'ondulation particulière de manière à délivrer respectivement des première et deuxième tensions d'ondulation CC,
dans lequel la première tension d'ondulation CC a une fréquence identique à celle de la deuxième tension d'ondulation CC, mais une phase qui diffère de celle de la deuxième tension d'ondulation CC d'un quart d'une période, et dans lequel les première et deuxième tensions d'ondulation CC ont des amplitudes pour des tensions de sortie des premier et deuxième circuits de commutation CC/CC d'augmentation, et une fréquence d'ondulation à laquelle le moteur ultrasonique résonne.

5. Procédé selon la revendication 4, dans lequel chacun des premier et deuxième circuits de commutation CC/CC comprend un inducteur, un premier transistor et une première diode, une extrémité de l'inducteur étant reliée à la borne de sortie de l'alimentation électrique et l'autre extrémité de l'inducteur étant reliée au collecteur du premier transistor et à l'anode de la première diode, le premier transistor étant relié entre la borne de sortie de l'inducteur et la borne de masse, et la première diode étant reliée entre la borne de sortie de l'inducteur et la borne de sortie du circuit complet, un deuxième transistor étant relié entre une borne de sortie de chacun des premier et deuxième circuits de commutation CC/CC et la borne de masse, une deuxième diode étant en liaison parallèle inversée avec le premier transistor, le procédé comprenant en outre :
la commande au deuxième transistor de décharger périodiquement chacun des éléments piézoélectriques à la fréquence d'ondulation.

6. Moteur ultrasonique comprenant :
un rotor ;
un stator comprenant un corps métallique cylindrique creux, mis en prise avec le rotor par des filetages de vis, dans lequel une pluralité d'éléments piézoélectriques divisés en groupes deux-deux constitués chacun d'un premier élément piézoélectrique et d'un deuxième élément piézoélectrique sont fournis sur le stator, dans lequel tous les quatre éléments piézoélectriques adjacents (41-44, 45-48) sont configurés pour être polarisés en séquence de « ++-- », et le stator constitue la borne commune pour la pluralité d'éléments piézoélectriques ; et
un circuit d'inversion de pont triphasé comprenant une première branche (51), une deuxième branche (52) et une troisième branche (53),
dans lequel une borne du premier élément piézoélectrique (41, 43, 45, 47) est reliée à la borne de sortie (A) de la première branche (51) et l'autre borne du premier élément piézoélectrique est reliée à une borne commune (B), dans lequel la borne commune est la borne de sortie de la deuxième branche, dans lequel une borne du deuxième élément piézoélectrique est reliée à la borne de sortie (C) de la troisième branche (53) et l'autre borne du deuxième élément piézoélectrique est reliée à la borne commune (B) ; et
dans lequel une phase d'une première tension alternative entre les bornes de sortie des première et deuxième branches diffère de celle d'une deuxième tension alternative entre les bornes de sortie des troisième et deuxième branches d'un angle de 90°, et chacune des première et deuxième tensions alternatives a une fréquence à laquelle le moteur ultrasonique résonne.

7. Moteur ultrasonique comprenant :
un rotor ;
un stator comprenant un corps métallique cylindrique creux, mis en prise avec le rotor par des filetages de vis, dans lequel une pluralité d'éléments piézoélectriques divisés en groupes deux-deux constitués chacun d'un premier élément piézoélectrique et d'un deuxième élément piézoélectrique sont fournis sur le stator, dans lequel tous les quatre éléments piézoélectriques adjacents sont polarisés en séquence de « ++-- », et le stator constitue une borne de masse commune (C) pour la pluralité d'éléments piézoélectriques ;
un premier circuit de commutation CC/CC ; et
un deuxième circuit de commutation CC/CC,
dans lequel une borne du premier élément piézoélectrique est reliée à la borne de sortie (A) du premier circuit de commutation CC/CC et l'autre borne du premier élément piézoélectrique est reliée à la borne de masse commune (C) ; et dans lequel une borne du deuxième élément piézoélectrique est reliée à la borne de sortie (B) du deuxième circuit de commutation CC/CC et l'autre borne du deuxième élément piézoélectrique est reliée à la borne de masse commune (C) ;
dans lequel les premier et deuxième circuits de commutation CC/CC sont configurés pour délivrer des première et deuxième tensions d'ondulation CC à travers des bornes de sortie respectives ; et
dans lequel la première tension d'ondulation CC a une fréquence identique à celle de la deuxième tension d'ondulation CC, mais une phase qui diffère de celle de la deuxième tension d'ondulation CC d'un quart d'une période, et dans lequel les première et deuxième tensions d'ondulation CC ont des amplitudes pour des tensions de sortie des premier et deuxième circuits de commutation CC/CC, et une fréquence d'ondulation à laquelle le moteur ultrasonique résonne.
